(19) Europäisches Patentamt / European Patent Office / Office européen des brevets

(11) **EP 4 388 023 B1**

(12) **EUROPEAN PATENT SPECIFICATION**

(45) Date of publication and mention of the grant of the patent:
**01.07.2026 Bulletin 2026/27**

(21) Application number: **22764630.4**

(22) Date of filing: **16.08.2022**

(51) International Patent Classification (IPC):
***C08G 18/12*** *(2006.01)* ***C08G 18/40*** *(2006.01)*
***C08G 18/42*** *(2006.01)* ***C08G 18/48*** *(2006.01)*
***C08G 18/76*** *(2006.01)* ***C09J 175/04*** *(2006.01)*

(52) Cooperative Patent Classification (CPC):
(C-Sets available)
**C08G 18/7671; C08G 18/12; C08G 18/4018; C08G 18/4238; C08G 18/4825; C09J 175/04;**
C08G 2170/20; C08L 2205/03 (Cont.)

(86) International application number:
**PCT/US2022/074994**

(87) International publication number:
**WO 2023/023498 (23.02.2023 Gazette 2023/08)**

(54) **SUSTAINABLE HYBRID REACTIVE HOT MELT ADHESIVE COMPOSITIONS**

NACHHALTIGE HYBRIDE REAKTIVE SCHMELZKLEBSTOFFZUSAMMENSETZUNGEN

COMPOSITIONS ADHÉSIVES THERMOFUSIBLES RÉACTIVES HYBRIDES DURABLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.08.2021 US 202163260303 P**

(43) Date of publication of application:
**26.06.2024 Bulletin 2024/26**

(73) Proprietor: **H.B. Fuller Company**
**St. Paul, Minnesota 55164-0683 (US)**

(72) Inventors:
- **WANG, Chao**
**Woodbury, Minnesota 55129 (US)**
- **O'BRIEN, Kellen**
**Paul, Minnesota 55106 (US)**

(74) Representative: **Maiwald GmbH**
**Elisenhof**
**Elisenstraße 3**
**80335 München (DE)**

(56) References cited:
**WO-A1-2011/109629**
**WO-A1-2012/154940**
**WO-A1-2017/110794**
**WO-A1-2018/165546**
**WO-A1-2020/043333**
**WO-A1-2021/041534**
**WO-A1-91/15530**
**US-A1- 2013 085 239**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



**(Cont. next page)**

(52) Cooperative Patent Classification (CPC): (Cont.)

C-Sets
**C09J 175/04, C08L 23/0853, C08L 67/025, C08L 93/04;**
**C09J 175/04, C08L 67/025, C08L 75/04, C08L 91/08;**
**C09J 175/04, C08L 67/025, C08L 75/04, C08L 93/04**

## Description

The invention is directed to hybrid reactive hot melt adhesive compositions that include sustainable materials.

Hybrid reactive hot melt adhesive compositions including both thermoplastic and reactive materials have been used in a wide variety of applications to form strong permanent bonds between various substrates. The thermoplastic material gives the composition initial green strength and the reactive materials cure over time to improve heat resistance and ultimate strength.

The reactive portion of hybrid reactive hot melt adhesive compositions is commonly based on isocyanate terminated polyurethane prepolymers that react with surface or ambient moisture to chain-extend, forming a urethane-urea polymer. These polyurethane prepolymers are traditionally produced using petrol (or petroleum)-based raw materials.

The thermoplastic portion commonly includes thermoplastic polymers and tackifying agents, also traditionally produced using petrol-based raw materials.

WO 2021/041534 relates to a moisture curable hot melt adhesive composition that includes isocyanate-terminated polyurethane prepolymer that includes the reaction product of a crystalline polyester polyol, a polyether polyol, and diisocyanate, clay, polyester/polyether elastomer, a first thermoplastic polymer selected from the group consisting of ethylene vinyl acetate copolymer, ethylene (alkyl)acrylate copolymer, and combinations thereof a tackifying agent, and optionally a second thermoplastic polymer selected from the group consisting of thermoplastic polyurethane, thermoplastic polycaprolactone, and combinations thereof.

WO 2012/154940 describes an adhesive composition that includes: one or more polyester polyether copolymers of formula I:

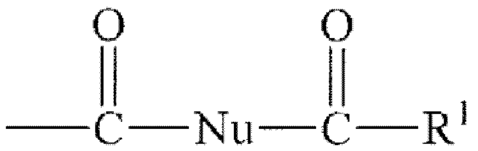
(I)

wherein Nu is a predominately cyclic nucleus and $R^1$ is randomly selected from either a $C_{2-6}$ alkylene or an amorphous, long-chain polyether subunit including a polyoxyalkylene group; one or more polyisocyanate prepolymers that includes the reaction product of: one or more polyols; and a polyfunctional isocyanate having a functionality of more than 2: polymeric MDI; and a first aromatic or aromatic- aliphatic polymer tackifying resin having a softening point of equal to or greater than 100° C.

WO 2018/165546 relates to a reactive hot melt adhesive composition including an isocyanate functional prepolymer derived from a polyfunctional. isocyanate having a functionality of about 2 or more and a polyol, an active hydrogen organofunctional silane, an active hydrogen non-silane capping agent and a thermoplastic polymer.

WO 91/15530 describes hot melt adhesive compositions that can be prepared by blending a polyester polyether thermoplastic elastomer having formula (I)

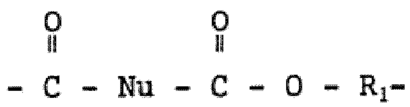
(I)

wherein Nu is a predominately cyclic nucleus and $R_1$ is randomly selected from either a $C_{2-6}$ alkylene or an amorphous polyether subunit comprising a polyoxyalkylene group with a polyisocyanate prepolymer.

WO 2017/110794 relates to a moisture-curable hot melt adhesive comprising (A) a urethane prepolymer having a terminal isocyanate group, (B) a metallocene-based polyolefin having a viscosity of 10,000 mPa·s or less at a temperature of 170°C and (C) a polyester-polyether copolymer.

US 2013/085239 describes polyether block copolymers of the general structure $B\text{-}(A\text{-}OH)_n$, where n is greater than or equal to 2 and blocks A are made up of polyoxypropylene units and the central block B of polyoxytetramethylene, polyoxyethylene, polybutadiene, polyisoprene, polyacrylate, polymethacrylate, polyamide, polyurethane, or polyester units.

WO 2020/043333 relates to a moisture curable hotmelt adhesive composition comprising at least one polyurethane prepolymer obtained from the reaction of a) at least one polyether; b) at least one (meth)acrylic resin; c) at least one crystalline polyester; d) at least one amorphous polyester; e) at least one isocyanate compound; in a presence of a catalyst, wherein at least one of said polyether, crystalline polyester and amorphous polyester is a partially or completely bio-based material.

WO 2011/109629 describes a one-part, moisture curable hot melt adhesive composition and solar panel assemblies including the same. The adhesive composition includes a thermoplastic polymer having a softening point of at least 120°C, an atmospheric curing prepolymer, and a silane adhesion promoter having a flash point greater than 100°C at atmospheric pressure and a boiling point greater than 100°C at from 0.5 mmHg to 15 mmHg.

End users have begun to request hybrid reactive hot melt adhesive compositions with increased sustainable content that have similar performance as compared to petrol-based reactive hot melt adhesive compositions.

SUMMARY

In one aspect, the invention features a hybrid reactive hot melt adhesive composition including a polyester polyether copolymer, a thermoplastic polymer different from the polyester polyether copolymer, a tackifying agent, and a polyurethane prepolymer including the reaction product of a sustainable polyol and a polyfunctional isocyanate having a functionality of 2 or more, wherein at least one of the group consisting of the polyester polyether copolymer, the thermoplastic polymer and the tackifying agent is a sustainable component.

In one embodiment, the reactive portion of the hybrid reactive hot melt adhesive composition is present at from 15% by weight to 70% by weight, or even from 20% by weight to 60%. In another embodiment, the hybrid reactive hot melt adhesive composition is free of petrol-based polyol and petrol-based tackifying agent. In a different embodiment, the hybrid reactive hot melt adhesive composition of claim 1 having a monomeric diisocyanate content of less than 0.1% by weight, as tested according to the CURRENTA HPLC-MS/MS CAM-0642303-18E - FEICA Test Method

In a different embodiment, the tackifying agent is bio-based. In another embodiment, the tackifying agent is present at from 32% by weight to 45% by weight. In one embodiment, the tackifying agent is selected from the group consisting of rosin-based tackifying agents and terpene based tackifying agents. In another embodiment, the tackifying agent is a rosin ester.

In one embodiment, the hybrid reactive hot melt adhesive composition has a no greater than 5% increase in Viscosity when tested according to the Viscosity Stability Test Method. In another embodiment, the hybrid reactive hot melt adhesive composition has a sustainable content of from 40% by weight to 100% by weight, or even from 60% by weight to 100% by weight.

In one embodiment, the hybrid reactive hot melt adhesive composition has an Initial Viscosity at 160°C of no greater than 20,000 mPa·s (no greater than 20,000 cP), no greater than 15,000 mPa·s (no greater than 15,000 cP), or even no greater than 7,500 mPa·s (no greater than 7,500 cP).

In another embodiment, the sustainable polyol is selected from the group consisting of bio-based and recycled. In a different embodiment, the sustainable polyol comprises a polyester polyol and a polyether polyol.

In one embodiment, the polyester polyether copolymer has a Melt Flow Rate (190°C, 2.16 kg) of from 7 to 20 grams/10 minutes. In a different embodiment, the thermoplastic polymer is selected from the group consisting of polyesters, polyurethanes, vinyl polymers and acrylic polymers. In another embodiment, the thermoplastic polymer is a bio-based polyurethane.

In one aspect, the invention features a hybrid reactive hot melt adhesive composition including from 3% by weight to 15% by weight of a polyester polyether copolymer, from 3% by weight to 15% by weight of a thermoplastic polymer, from 20% by weight to 40% by weight of a tackifying agent and a polyurethane prepolymer comprising the reaction product of from 20% by weight to 60% by weight of a sustainable polyol, and from 5% by weight to 15% by weight of a polyfunctional isocyanate having a functionality of 2 or more.

In one embodiment, the thermoplastic polymer is sustainable and the hybrid reactive hot melt adhesive composition has a Viscosity @ 160°C of no greater than 7500 mPa·s (no greater than 7500 cP).

In another embodiment, the tackifying agent is an aromatic hydrocarbon. In a different embodiment, the tackifying agent is rosin-based and the hybrid reactive hot melt adhesive composition has no greater than a 5% increase in Viscosity when tested according to the Viscosity Stability Test Method. In still another embodiment, the thermoplastic polymer and the tackifying agent are sustainable components.

In one embodiment, the invention features an article including two substrates bonded with the hybrid reactive hot melt adhesive composition, wherein the two substrates are selected from the group consisting of wood, engineered wood, glass, metal, polyolefin, polyether sulfones, polycarbonate, polyamide, polyester, acrylic, acrylonitrile butadiene styrene, poly (methyl methacrylate), poly vinyl chloride, fiber reinforced versions thereof, surface treated versions thereof, and combinations thereof.

In another embodiment, the invention features an electronic assembly comprising the hybrid reactive hot melt adhesive composition. In one embodiment, the invention features a vehicle component comprising the hybrid reactive hot melt adhesive composition.

The inventors have discovered hybrid reactive hot melt adhesive compositions that include a high percent of sustainable content, are relatively low in Viscosity @ 160°C and have similar bond strength as compared to petrol-based hybrid reactive hot melt compositions. The hybrid reactive hot melt adhesive composition can further be formulated to be

heat stable.

DEFINITIONS

"Renewable" is used herein to refer to a resource that is produced by a natural process at a rate comparable to its rate of consumption. The resource can be replenished naturally or by engineered agricultural techniques. Examples of renewable resources include but are not limited to plants (e.g., sugar cane, sugar beets, corn, wheat, potatoes, citrus fruit (e.g. oranges), woody plants, cellulosic waste ), animals, fish, bacteria, fungi, and forestry products (e.g. pine and spruce trees). These resources can be naturally occurring, hybrids, or genetically engineered organisms.

Natural resources such as crude oil, coal and natural gas are not considered renewable as they are derived from materials that will run out or will not be replenished for thousands or even millions of years.

"Bio-based" is used herein to refer to a component that is produced or is derived from at least 25% by weight of a renewable material.

"Recycled" is used herein to refer to a component that is produced or is derived from at least 25% by weight of a recycled material

"Sustainable" is used herein to refer to a component that is selected from the group consisting of bio-based and recycled.

Weight percent as used herein refers to the weight percent of the component in the hybrid reactive hot melt adhesive composition.

DETAILED DESCRIPTION

HYBRID REACTIVE HOT MELT ADHESIVE COMPOSITION

The invention features a hybrid reactive hot melt adhesive composition including a polyester polyether copolymer, a thermoplastic polymer different from the polyester polyether copolymer, a tackifying agent, and a polyurethane prepolymer comprising the reactive product of a sustainable polyol, and a polyfunctional isocyanate having a functionality of 2 or more, wherein at least one of the group consisting of the polyester polyether copolymer, the thermoplastic polymer and the tackifying agent is a sustainable component.

The invention features a hybrid reactive hot melt adhesive composition including from 3% by weight to 15% by weight of a polyester polyether copolymer, from 3% by weight to 15% by weight of a thermoplastic polymer different from the polyester polyether copolymer, from 20% by weight to 40% by weight of a sustainable tackifying agent, and a polyurethane prepolymer comprising the reaction product of from 20% by weight to 60% by weight of a sustainable polyol, and from 5% by weight to 15% by weight of a polyfunctional isocyanate having a functionality of 2 or more.

The invention features a hybrid reactive hot melt adhesive composition including from 3% by weight to 15% by weight of a polyester polyether copolymer, from 3% by weight to 15% by weight of a thermoplastic polymer different from the polyester polyether copolymer, from 20% by weight to 40% by weight of a sustainable tackifying agent comprising a rosin based tackifying agent, and a polyurethane prepolymer comprising the reaction product of from 20% by weight to 60% by weight of a sustainable polyol and from 5% by weight to 15% by weight of a polyfunctional isocyanate having a functionality of 2 or more wherein the hybrid reactive hot melt adhesive composition has a no greater than 5% increase in Viscosity when tested according to the Viscosity Stability Test Method.

The invention features a hybrid reactive hot melt adhesive composition including from 3% by weight to 15% by weight of a polyester polyether copolymer, from 3% by weight to 15% by weight of a sustainable thermoplastic polymer different from the polyester polyether copolymer, from 20% by weight to 40% by weight of a tackifying agent comprising an aromatic hydrocarbon, and a polyurethane prepolymer comprising the reaction product of from 20% by weight to 60% by weight of a sustainable polyol, and from 5% by weight to 15% by weight of a polyfunctional isocyanate having a functionality of 2 or more wherein the hybrid reactive hot melt adhesive composition has an Initial Viscosity of no greater than 10,000 mPa·s (no greater than 10,000 cP) at 160°C.

The hybrid reactive hot melt adhesive composition is solid at room temperature. By solid it is meant that it is not a liquid. The hybrid reactive hot melt adhesive composition can have an Initial Viscosity of no greater than 20,000 mPa·s (no greater than 20,000 centipoise (cP)), no greater than 15,000 mPa·s (no greater than 15,000 cP), no greater than 10,000 mPa·s (no greater than 10,000 centipoise cP), no greater than 7,500 mPa·s (no greater than 7,500 cP), from 500 mPa·s to 20,000 mPa·s (from 500 cP to 20,000 cP), from 500 mPa·s to 15,000 mPa·s (from 500 cP to 15,000 cP), from 500 mPa·s to 10,000 mPa·s (from 500 cP to 10,000 cP), or even from 500 mPa·s to 7500 mPa·s (from 500 cP to 7500 cP) at 160°C, or even at 140°C.

The hybrid reactive hot melt adhesive composition can have a Sustainable Content of from 40% by weight to 100% by weight, from 50% by weight to 100% by weight, from 60% by weight to 100% by weight, from 62% by weight to 100% by weight, from 65% by weight to 100% by weight, from 70% by weight to 100% by weight, from 80% by weight to

100% by weight. or even from 90% by weight to 100% by weight.

The hybrid reactive hot melt adhesive composition can have a bio-based carbon content according to ASTM 6866-20 of from 40% by weight to 100% by weight, from 50% by weight to 100% by weight, from 60% by weight to 100% by weight, from 62% by weight to 100% by weight, from 65% by weight to 100% by weight, from 70% by weight to 100% by weight, from 80% by weight to 100% by weight. or even from 90% by weight to 100% by weight based on the total carbon content.

The hybrid reactive hot melt adhesive composition can have a monomeric diisocyanate content of no greater than 10% by weight, no greater than 7.5% by weight, no greater than 5% by weight, no greater than 1% by weight, no greater than 0.5% by weight, from 0.0% by weight 7.5% by weight, from 0.0% by weight to 5% by weight, or even less than 0.1% by weight, as tested according to the CURRENTA HPLC-MS/MS CAM-0642303-18E - FEICA Test Method.

The hybrid reactive hot melt adhesive composition can be free of petrol-based polyols and petrol-based tackifying agents. Alternatively, or additionally, the hybrid reactive hot melt adhesive composition can be free of petrol-based thermoplastic polymers. Alternatively, the hybrid reactive hot melt adhesive composition can include a limited amount of these materials. The hybrid reactive hot melt adhesive composition can include no greater than 60% by weight, no greater than 50% by weight, no greater than 40% by weight, no greater than 35% by weight, 2% by weight to 60% by weight, from 5% by weight to 40% by weight, or even from 5% by weight of 30% by weight of petrol based materials.

The reactive portion of the hybrid reactive hot melt adhesive composition includes all polyols, the polyfunctional isocyanate and any catalyst. The reactive portion of the hybrid reactive hot melt adhesive composition is present at no greater than 70% by weight, no greater than 60% by weight, no greater than 55% by weight, no greater than 50% by weight, from 15% by weight to 70% by weight, from 10% by weight to 65% by weight, from 20% by weight to 60% by weight, or even from 25% by weight to 55% by weight.

POLYURETHANE PREPOLYMER

The hybrid reactive hot melt adhesive composition includes one or more polyurethane prepolymers. The polyurethane prepolymer is generally isocyanate terminated. The polyurethane prepolymer comprises the reaction product of a sustainable polyol and a polyfunctional isocyanate. The sustainable polyol can be selected from the group consisting of a bio-based polyol and a recycled polyol.

SUSTAINABLE POLYOL

The hybrid reactive hot melt adhesive composition includes a sustainable polyol. The sustainable polyol can be selected from the group consisting of bio-based polyol and recycled polyol.

The polyurethane prepolymer comprises the reaction product of from 10% by weight to 70% by weight, from 10% by weight to 60% by weight, from 15% by weight to 60% by weight, from 10% by weight to 50% by weight, or even from 15% by weight to 50% by weight of the sustainable polyol based on the total amount of components in the hybrid reactive hot melt adhesive composition.

BIO-BASED POLYOL

The hybrid reactive hot melt adhesive composition can be derived from a bio-based polyol. The bio-based polyol can include more than one bio-based polyol

One of the polyols can be a polyester polyol that is semi-crystalline.

The bio-based polyol is selected from the group consisting of polyether polyol and polyester polyol but is preferably includes at least one polyester polyol. The bio-based polyol can be derived from e.g. soybean, millet, nuts (e.g. cashew nuts), corn, potatoes, citrus fruit (e.g. oranges), woody plants, cellulosic waste, animals, fish, bacteria, fungi, forestry products (e.g. pine and spruce trees, tall oil, castor oil, sugar (sugar beets, sugar cane), wheat, or any other renewable material.

The bio-based polyol can be produced or derived from ethylene glycol, 1,3-propanediol, 1,4-butanediol, 1,5-pentane diol, 1,6-hexane diol, ether carbonate diol, caprolactone diol, dimerized fatty diol, succinic acid, adipic acid, sebacic acid, azelaic acid, dodecanedioic acid, tetradecane dioic acid, hexadecanedioic acid, octadecane dioic acid, terephthalic acid, dimerized fatty acid, 1,18-diemthyl ester, lactic acid.

The bio-based polyol is produced or is derived from at least 25% by weight, at least 30% by weight, at least 50% by weight, at least 60% by weight, at least 70% by weight, at least 80% by weight, at least 90% by weight, from 25% by weight to 100% by weight, from 50% by weight to 100% by weight, from 70% by weight to 100% by weight, from 90% by weight to 100% by weight, or even 100% by weight of a renewable material.

The bio-based polyol can have bio-based carbon content according to ASTM 6866-20 of at least 25%, at least 30%, at least 50%, at least 60%, at least 70%, at least 80%, at least 90%, from 25% to 100%, from 50% to 100%, from 70%

to 100%, from 90% to 100%, or even 100% based on the total carbon content.

Useful bio-based polyols include polyols available under the BIO-HOOPOL designation from Synthesia Technology (Barcelona, Spain) including BIO-HOOPOL 11034 (an amorphous liquid polyester polyol with a Bio-based Carbon content = 64.2% by ASTM 6866-20), BIO-HOOPOL 11003 (a crystalline solid polyester polyol with a Bio-based Carbon content = 100% by ASTM 6866-20), BIO-HOOPOL 11532 (Bio-based Carbon content = 100% by ASTM 6866-20), BIO-HOOPOL 11503 (Bio-based Carbon content = 100% by ASTM 6866-20), and BIO-HOOPOL 12930 (Bio-based Carbon content = 59.2% by ASTM 6866-20), under the DYNACOLL TERRA designation from Evonik Gmbh (Germany) including DYNACOLL TERRA EP 481.01, a crystalline solid polyester, made from 100% renewable resources available from Evonik Gmbh (Germany), liquid polyether polyols, made from 100% renewable resources available under the VELVETOL designation from Allessa GmbH (Frankfurt, Germany) including VELVETOL H-1000 AND VELVETOL H-2000 and polyester polyols available under the CHANDA trade designation from Chanda Chemical Corp. (Changhua, Taiwan) including CHANDA CA-4030SX (65.6% bio-based), polyols available from Panolam Industries International, Inc. including PIOTHANE 3500 H-SA (42% bio-based) and 3000 PDO-SBA (100% bio-based) and polyols available from Croda International PLC including PRIPLAST 3238 (100% bio-based) and PRIPLAST 3294 (100% bio-based).

RECYCLED POLYOL

The hybrid reactive hot melt adhesive composition can be derived from a recycled polyol i.e. a polyol derived from recycled materials. The recycled polyol can include more than one recycled polyol. The recycled polyol can be an amorphous solid. The recycled polyol can improve the strength of the hybrid reactive hot melt adhesive composition.

The recycled polyol can be derived from recycled polycarbonate, recycled polyethylene terephthalate (PET), or any other recycled material.

Recycled polycarbonate can come from scrap polycarbonate recovered from containers, compact discs, construction materials, eyeglasses, consumer electronics or other sources.

Recycled PET can come from a variety of waste sources. The most common is the post-consumer waste stream of PET from plastic bottles or other containers.

The recycled polyol is derived from at least 25% by weight of a recycled material, but can be preferably derived from at least 30% by weight, at least 35% by weight, at least 60% by weight, at least 70% by weight, at least 80% by weight, at least 90% by weight, from 25% by weight to 100% by weight, from 35% by weight to 100% by weight, from 50% by weight to 100% by weight, from 75% by weight to 100% by weight or even 100% by weight of a recycled material.

Useful recycled polyols include polyols available under the HOOPOL designation including HOOPOL F-39037 (38% by weight Post-Consumer Recycled PET by ISO 14021:2016) available from Synthesia Technology (Barcelona, Spain)

POLY FUNCTIONAL ISOCYANATE

The polyfunctional isocyanate can be liquid or solid at room temperature. The polyfunctional isocyanate can be based on sustainable materials, such as a bio-based difurfuryl diisocyanate, bio-based dimeryl diisocyanate, bio-based diphenyl methylene diisocyante or other renewable diisocyanate. The polyfunctional isocyanate can be a blend of more than one diisocyanate.

Additional useful diisocyanates include, e.g., monomeric diisocyanates and oligomeric diisocyanates. The polyfunctional isocyanate can be any suitable polyfunctional isocyanate including, e.g., monomeric diisocyanates, oligomeric diisocyanates, aromatic diisocyanates, aliphatic diisocyanates, clycloaliphatic diisocyanates, and combinations thereof. Useful aromatic diisocyanates include, e.g., diphenyl methylene diisocyanate (MDI), (e.g., diphenylmethane-2,4'-diisocyanate (i.e., 2,4'-MDI), diphenylmethane-2,2'-diisocyanate (i.e., 2,2'-MDI), diphenylmethane-4,4'-diisocyanate (i.e., 4,4'-MDI), and combinations thereof), tetramethylxylene diisocyanate, naphthalene diisocyanate (e.g., naphthalene-1,5-diisocyanate, naphthalene-1,4-diisocyanate, and combinations thereof), toluene diisocyanate (TDI) (e.g., 2,4-TDI, 2,6-TDI, and combinations thereof), and combinations thereof. Useful cycloaliphatic diisocyanates include, e.g., 1-isocyanatomethyl-3-isocyanato-1,5,5-trimethyl-cyclohexane (i.e., isophorone diisocyanate (i.e., IPDI)), 1-methyl-2,4-diisocyanato-cyclohexane, 1,4-diisocyanato-2,2,6-trimethylcyclohexane (i.e., TMCDI), hydrogenation products of the aforementioned aromatic diisocyanates (e.g., hydrogenated 2,4'-MDI, hydrogenated 2,2'-MDI, hydrogenated 4,4'-MDI and combinations thereof), and combinations thereof. Useful aliphatic diisocyanates include, e.g., hexamethylene diisocyanate (HDI) (e.g., 1,6-diisocyanato-2,2,4-trimethylhexane, 1,6-diisocyanato-2,4,4-trimethylhexane diisocyanate, and combinations thereof), lysine diisocyanate, dodecane diisocyanate and combinations thereof.

Preferably the polyfunctional isocyanate is a monomeric isocyanate. Useful isocyanate monomers are commercially available under a variety of trade designations including, e.g., under the DESMODUR and MONDUR series of trade designations from COVESTRO LLC (Pittsburgh, Pennsylvania) including, MONDUR M, 4,4'-MDI and DESMODUR 44 C FL MB1 (4,4'- MDI, 60% by weight bio-based), LUPRANATE M, 4,4'-MDI from BASF Corp. (Wyandotte, Michigan),

RUBINATE 44 from Huntsman Corp. (Auburn Hills, Michigan), ONGRONAT 3000, a 4,4-MDI available from Wanhua Chemical Group (Yantai, China), ISONATE M 125 from The Dow Chemical Company (Midland, Michigan) and DDI 1410, a dimeryl diisocyanate, from BASF Corp. (Wyandotte, Michigan).

The polyurethane prepolymer includes the reaction product of from 5% by weight to 35% by weight, from 10% by weight to 30% by weight, or even from 10% by weight to 20% by weight of polyfunctional isocyanate based on the total amount of components in the hybrid reactive hot melt adhesive composition.

POLYESTER POLYETHER COPOLYMER AND THERMOPLASTIC POLYMER

The hybrid reactive hot melt adhesive composition includes a polyester polyether copolymer and thermoplastic polymer. The polyester polyether copolymer and the thermoplastic polymer can be derived from the group selected from bio-based monomers, petrol-based monomers, and combinations thereof. The bio-based monomers can be selected from the group consisting of ethylene, propylene, isoprene, butadiene, styrene. However, useful bio-based monomers are not restricted to this group. Bio-based monomers are commonly derived from cellulose, starch and sugar e.g. glucose.

Alternatively, polyester polyether copolymer and the thermoplastic polymer can be derived from petrol-based materials. Bio-based and petrol-based thermoplastic polymers can be combined in the present invention in any ratio, depending on cost and availability. Recycled polymers can also be used, alone or in combination with bio-based, and/or petrol-based thermoplastic polymers.

POLYESTER POLYETHER COPOLYMER

The polyester polyether copolymers can include polymers of formula I:

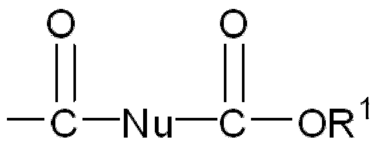 (I)

wherein Nu is a predominately cyclic nucleus and $R^1$ is randomly selected from either a $C_{2-6}$ alkylene or an amorphous, long-chain polyether subunit that includes a polyoxyalkylene group. The nucleus may be derived from a dicarboxylic acid which may be aromatic or aliphatic. The terms "dicarboxylic acid" and "diacid" as used herein are meant to include dicarboxylic acids, diacids, and their equivalents. The aromatic nucleus may be derived from aromatic dicarboxylic acids. Representative aromatic dicarboxylic acids can include for example terephthalic acid, isophthalic acid, phthalic acid, substituted dicarboxy compounds with benzene nuclei such as bis(p-carboxy-phenyl) methane, p-oxy(p-carboxyphenyl) benzoic acid, ethylene-bis(p-oxybenzoic acid), ethylene-bis-(p-benzoic acid), tetramethylene-bis(p-oxybenzoic acid), 1,5-naphthalene dicarboxylic acid, 2,6-naphthalene dicarboxylic acid, 2,7-naphthalene dicarboxylic acid, phenanthrene dicarboxylic acid, anthracene dicarboxylic acid, 4,4'-sulfonyl dibenzoic acid, indene dicarboxylic acid, as well as ring substituted derivatives thereof such as $C_{2-10}$ alkyl, halo, alkoxy or aryl derivatives. Hydroxy acids such as p(β-hydroxyethoxy) benzoic acid providing an aromatic dicarboxylic acid can also be utilized.

In embodiments, the precursor to the nucleus can be a methyl ester of the dicarboxylic acid. In embodiments, the nucleus can be derived from dimethyl isophthalate, dimethyl terephthalate, dimethyl cyclohexane dicarboxylate or mixtures thereof. In embodiments, the nucleus can be an aromatic nucleus derived from a mixture of dimethyl isophthalate and dimethyl terephthalate.

The characteristics of $R^1$ determine whether the segment of the copolymer is a hard or a soft segment. In a hard segment, $R^1$ can be a $C_{2-6}$ alkylene group, which can be derived from aliphatic, alicyclic, or aromatic short chain diols with molecular weights of less than 250. In embodiments, such diols are those with 2-15 carbon atoms such as ethylene, propylene, tetramethylene, isobutylene, pentamethylene, 2,2-dimethyltrimethylene, hexamethylene and decamethyleneglycols, dihydroxycyclohexane, cyclohexane dimethanol, resorcinol, hydroquinone, 1,5-dihydroxynapthalene. In embodiments, aliphatic diols with 2 to 6 carbon atoms can be utilized. Suitable bisphenols include bis(p-hydroxydiphenyl), bis(p-hydroxyphenyl) methane, bis(p-hydroxyphenyl) methane, propane and 2,2-bis(p-hydroxyphenyl) propane. Equivalent ester forming derivatives of diols are also useful. Such diol derivatives may be used to form the diol in situ prior to forming the hard segment.

The soft segments can be formed when $R^1$ is an amorphous, long chain polyether subunit. This subunit can have a molecular weight of 350 to 6,000; in some embodiments 350 to 3,000; and in some embodiments from 1,000 to 3,000. The subunit can have a melting point of less than 55° C and a carbon:oxygen ratio of greater than 2.5:1. Exemplary polyethers can include for example, the poly(alkylene oxide) glycols wherein alkylene is $C_{2-6}$ such as poly(1,2-and 1,3-propylene oxide) glycol, poly(tetramethylene-oxide) glycol, poly(pentamethylene oxide) glycol, poly(hexamethylene

oxide) glycol and poly (1,2-butylene oxide) glycol; random or block copolymers of ethylene oxide and 1,2-propylene oxide (used in proportions such that the carbon to oxygen mole ratio in the glycol exceeds 2.5:1) and poly-formals prepared by reacting formaldehyde with glycols, such as pentamethylene glycol, or mixtures of glycols, such as a mixture of tetramethylene and pentamethylene glycols. Again, derivatives of polyols may also be used to form polyether subunits in situ prior to formation of the polyester polyether copolymer.

In embodiments, the polyether subunit can include a polyoxyalkylene polyol having from 2 to 6 carbon atoms in the alkylene group. In embodiments, the polyoxyalkylene polyol comprises polytetramethylene ether glycol (PTMEG). "Polyol" as used herein can include both diols and triols. One class of polyester polyether copolymers can include compositions that have, based on the total weight of the copolymer (A) 1 to 99 percent by weight of a segmented copolyester elastomer that includes a multiplicity of recurring short chain ester units and long chain ester units joined through ester linkages, said short chain ester units amounting to 15 to 75 percent by weight of said copolyester and being of the formula II:

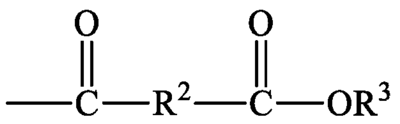
(II),

said long chain ester units amounting to 25 to 85 percent by weight of said copolyester and being of the formula III:

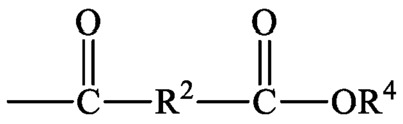
(III)

wherein $R^2$ can be a divalent aromatic radical remaining after removal of the carboxyl groups from aromatic dicarboxylic acid having a molecular weight of less than 350, $R^3$ can be a divalent radical remaining after removal of the hydroxyl groups from an organic diol having a molecular weight of less than 250, and $R^4$ can be a divalent radical remaining after removal of the terminal hydroxyl groups from long chain glycols or polyalkylene glycols having an average molecular weight of 350 to 6000, said copolyester having a melt index of less than 150 and a melting point of at least 125° C, and (B) 1 to 99 percent by weight of a low molecular weight thermoplastic tackifying agent which can form compatible mixtures with the segmented copolyester, is thermally stable at 150°C, and has a melt viscosity of less than 10,000 mPa·s (less than 10,000 centipoise) at 200° C. These compositions are disclosed in U.S. Pat. Nos. 3,832,314; 3,932,326; and 3,959,062 to Hoh et al.

Embodiments can include compositions according to the above formulas wherein $R^2$ is derived from terephthalic acid or a mixture of terephthalic and isophthalic acids, $R^3$ is derived from an organic diol such as butanediol and $R^4$ is derived from a long chain glycol such as polytetramethylene ether glycol (PTMEG).

The polyester polyether copolymer is considered primarily thermoplastic. However, it can contain a limited OH value, such as e.g. an OH value of < 10, or even < 5, < than 3 which could result in reaction into the polyurethane prepolymer.

Exemplary polyester polyether copolymers that may be utilized include for example the HYTREL line of thermoplastic polyester elastomers from DuPont (Wilmington, DE) including HYTREL 3078 (Melt Flow Index = 5 g/10 min (190°C, 2.16 kg) according to ISO 1133) and the RITEFLEX line of thermoplastic polyester elastomers from Ticona GmbH (Germany) including RITEFLEX 425 (Melt Flow Index = 13 g/10 min (190°C, 2.16 kg) according to ISO 1133).

The polyester polyether copolymers can have a Melt Flow Index at 190°C with a 2.16 kg weight as tested according to ISO 1133 of from 3 to 50, from 6 to 40, from 7 to 30, or even from 7 to 20 grams/10 minutes.

The polyester polyether copolymer can be present in the hybrid reactive hot melt adhesive composition at from 2% by weight to 20% by weight, from 3% by weight to 15% by weight, from 3% by weight to 12% by weight, from 3% by weight to 10% by weight, or even from 4% by weight to 10% by weight based on the total weight of the hybrid reactive hot melt adhesive composition.

THERMOPLASTIC POLYMER

The hybrid reactive hot melt adhesive compositions of this invention include a thermoplastic polymer different from the polyester polyether copolymer. The thermoplastic polymer includes thermoplastic polymers with a limited OH value, such as e.g. an OH value of < 10, or even < 5.

The thermoplastic polymer can be selected from the group consisting of polyesters (e.g. caprolactone), thermoplastic polyurethanes, vinyl polymers (e.g. ethylene vinyl acetate copolymers, ethylene acrylate copolymers) and acrylic polymers (e.g. methyl acrylate, ethyl acrylate, n-butyl acrylate, isobutyl acrylate, n-propyl or iso-propyl acrylate

as well as the corresponding methacrylates).

The thermoplastic polymer can have a Melt Flow Index at 190°C with a 2.16 kg weight as tested according to ISO 1133 of no less than 10, from 10 to 200, from 10 to 100, from 10 to 50, or even from 10 to 40 grams/10 minutes.

The thermoplastic polymer can have a Melt Flow Index at 170°C with a 2.16 kg weight as tested according to ISO 1133 of no greater than 100, from 5 to 100, or even from 10 to 75 grams/10 minutes

Useful thermoplastic polymers include those sold under the CAPA trade designation including CAPA 6400 and CAPA 6500 available from Ingevity (Brussels, Belgium), those sold under the PEARLBOND trade designation including PEARLBOND **DIPP** 539 and PEARLBOND ECO 590 available from The Lubrizol Corp. (Wickliffe, Ohio) and ethylene-vinyl acetate copolymers sold under the LEVAMELT® trade designation from Lanxess Corporation (Pittsburgh, PA) including LEVAMELT 456.

The thermoplastic polymers can be present in the hybrid reactive hot melt adhesive composition at from 3% by weight to 20% by weight, from 3% by weight to 15% by weight, from 4% by weight to 15% by weight, from 3% by weight to 12% by weight, or even from 3% by weight to 10% by weight.

TACKIFYING AGENT

The hybrid reactive hot melt adhesive composition includes a tackifying agent. The tackifying agent can include more than one tackifying agent.

The tackifying agent can be selected from the group consisting of sustainable, petrol-based, and combinations thereof. In a preferred embodiment, the tackifying agent is sustainable component.

The tackifying agent can be a liquid or a solid, however preference is given to tackifying agents that are solid at room temperature (18-26°C). The tackifying agent can have a Ring and Ball Softening Point as reported by the supplier of at least 80°C, at least 90°C, from 80°C to 140°C, from 90°C to 120°C, or even from 90°C to 110°C.

Useful sustainable tackifying agents can include terpene based tackifying agents (e.g., terpenes, modified terpenes and hydrogenated versions thereof) and rosin based tackifying agents (e.g. natural rosins, modified rosins, rosin esters, and hydrogenated versions thereof).

Sustainable tackifying agents (e.g. terpene based tackifying agents, rosin based tackifying agents ) can be modified with materials such styrene, phenol, carboxylic acids, anhydrides (e.g., maleic anhydride) and combinations thereof.

Examples of useful terpene and modified terpenes include those derived from alpha-pinene, beta-pinene, gamma-limonene, dipentene, or mixtures thereof.

Examples of useful rosin based tackifying agents include natural and modified rosins (e.g. disproportionated), including gum rosin, wood rosin, tall oil rosin, distilled rosin, hydrogenated rosin, dimerized rosin and polymerized rosin (e.g. rosin esters). Examples of useful rosin esters include e.g., glycerol esters of pale wood rosin, glycerol esters of hydrogenated rosin, glycerol esters of polymerized rosin, pentaerythritol esters of natural and modified rosins including pentaerythritol esters of pale wood rosin, pentaerythritol esters of hydrogenated rosin, pentaerythritol esters of tall oil rosin, and phenolic-modified pentaerythritol esters of rosin.

Useful rosin based tackifying agents include near water white rosin ester tackifying agents obtained by the processes taught in US10611926B2 and US2020199408A1 .

The hybrid reactive hot melt adhesive composition can include from 10% by weight to 70% by weight, from 10% by weight to 60% by weight, from 15% by weight to 55% by weight, from 20% by weight to 50% by weight, from 25% by weight to 50% by weight, from 30% by weight to 45% by weight, or even from 32% by weight to 45% by weight of sustainable tackifying agent.

Useful sustainable tackifying agents are commercially available under a variety of trade designations including rosin ester tackifying agents available under the SYLVALITE trade designation from Kraton Corporation (USA) such as e.g. SYLVALITE RE 100L, SYLVALITE 9100 and SYLVALITE RE 105L and under the KOMOTAC trade designation from Guangdong Komo Co. Ltd. such as e.g. KOMOTAC KM-100 and terpene tackifying agents available under the SYLVARES trade designation from Kraton Corporation (USA) such as e.g. SYLVARES 6100, SYLVARES TR M1115 and SYLVARES TP 2040 and the PICCOLYTE trade designation from DRT (France) such as PICCOLYTE S85 and PICCOLYTE F105IG.

Petrol-based tackifying agents can also be used in the compositions of this invention. Suitable classes of petrol-based tackifying agents include hydrocarbon tackifying agents e.g., aromatic, aliphatic and cycloaliphatic hydrocarbon resins, aromatic modified aliphatic or cycloaliphatic hydrocarbon resins, terpenes, modified terpenes and combinations thereof. Examples of useful aliphatic and cycloaliphatic petrol hydrocarbon resins include aliphatic and cycloaliphatic petrol hydrocarbon resins include, e.g., branched and unbranched C9 resins and C10 resins. Examples of useful polyterpene resins include polyterpene resins, and copolymers and terpolymers of natural terpenes (e.g. styrene-terpene, alpha-methyl styrene-terpene and vinyl toluene-terpene).

Preferred classes petrol-based tackifying agents include hydrogenated hydrocarbon resins having aromatic content. Hydrogenated hydrocarbon resins having aromatic content can be selected from the group consisting of aromatic

modified hydrocarbon resin and aromatic hydrocarbon resin.

The aromatic modified hydrocarbon resins are primarily non-aromatic, but include from 3% to 15% of aromatic content. The aromatic content is measured via proton Nuclear Magnetic Resonance (NMR) integration. Aromatic modified hydrocarbon resins can be selected from aliphatic and cycloaliphatic hydrocarbon resins, terpenes and modified terpenes.

The aromatic hydrocarbon resin is derived from aromatic vinyl monomers. Suitable examples of the aromatic hydrocarbon resins include but are not limited to aromatic hydrocarbon resins comprising monomers selected from the group consisting of styrene, alpha methyl styrene, vinyl toluene, indene, or any other aromatic monomer or end block associating monomer. Aromatic hydrocarbon resins can have greater than 40%, greater than 50 %, greater than 60%, from 40% to 100%, or even from 50% by weight to 100% of aromatic content. The aromatic content is measured via proton Nuclear Magnetic Resonance (NMR) integration.

The hybrid reactive hot melt adhesive composition can include from 10% by weight to 70% by weight, from 10% by weight to 60% by weight, from 15% by weight to 55% by weight, from 20% by weight to 50% by weight, from 25% by weight to 50% by weight, from 30% by weight to 45% by weight, from 32% by weight to 45% by weight, no more than 30% by weight, or even no more than 20% by weight of the petrol-based based tackifying agent.

Useful petrol-based tackifying agents include hydrogenated aromatic hydrocarbon resins include KRISTALEX and PLASTOLYN series of trade designations from Eastman Chemical Company (Kingsport, Tenn.) including, e.g., KRISTALEX 3100, PLASTOLYN 240 (55% aromatic content) and PLASTOLYN 290.

CATALYST

The hybrid reactive hot melt adhesive composition optionally includes a catalyst to increase the cure reaction rate. Useful catalysts include ether and morpholine functional groups, examples of which include di(2,6-dimethyl morpholinoethyl) ether and 4,4'-(oxydi-2,1-ethanediyl)bis-morpholine (DMDEE). Suitable commercially available catalysts include, e.g., JEFFCAT DMDEE 4,4'-(oxydi-2,1-ethanediyl) bis-morpholine, which is available from Huntsman Corp. (Houston, Texas). Other suitable catalysts include, e.g., metallic carboxylates and dibutyl tin dilaurate. Useful metallic carboxylates include, e.g., cobalt carboxylates, manganese carboxylates, and mixtures thereof.

When a catalyst is present, the hybrid reactive hot melt adhesive composition includes from about 0.01 % by weight to about 0.5 % by weight catalyst.

ADDITIONAL COMPONENTS

The hybrid reactive hot melt adhesive composition optionally includes a variety of additional components including, e.g., antioxidants, stabilizers, additional polymers, tackifying agents, isocyanate trimers (e.g. DESMODUR N3300, an HDI-trimer, DESMODUR ECO N7300, a bio-based PDI-trimer available from BASF Corp. (Wyandotte, Michigan), adhesion promoters, ultraviolet light stabilizers, UV brighteners, rheology modifiers, corrosion inhibitors, colorants (e.g., pigments (e.g. carbon black) and dyes), fillers (e.g. talc), nucleating agents, flow agents (e.g. LANCO FLOW U available from The Lubrizol Corp. (Wickliffe, Ohio)), fatty alcohols (e.g. VEGAROL 1698 available from VVF LLC) and combinations thereof.

The polyurethane prepolymer can optionally be derived in part from additional polyols including petrol-based polyols, e.g., polyester polyols, polyether polyols, and combinations thereof. Useful petrol-based polyols include those sold under the DYNACOLL trade designation, including DYNACOLL 7380, a hexane diol dodecanedioate polyol available from Evonik Gmbh (Germany) and those sold under the VORANOL trade designation, including VORANOL 220-056N, polypropylene glycol diol available from The Dow Chemical Company (Midland, Michigan).

Useful antioxidants include, e.g., pentaerythritol tetrakis[3,(3,5-di-tert-butyl-4-hydroxyphenyl)propionate], 2,2'-methylene bis(4-methyl-6-tert-butylphenol), phosphites including, e.g., tris-(p-nonylphenyl)-phosphite (TNPP) and bis(2,4-di-tert-butylphenyl)4,4'-diphenylene-diphosphonite, di-stearyl-3,3'-thiodipropionate (DSTDP), and combinations thereof. Useful antioxidants are commercially available under a variety of trade designations including, e.g., the IRGANOX series of trade designations including, e.g., IRGANOX 1010, IRGANOX 565, and IRGANOX 1076 hindered phenolic antioxidants, and IRGAFOS 168 phosphite antioxidant, all of which are available from BASF Corporation (Florham Park, New Jersey), ETHYL 702 4,4'-methylene bis(2,6-di-tert-butylphenol), which is available from Albemarle Corporation (Baton Rouge, Louisiana) and EVERNOX 10, phenolic antioxidant, available from Everspring Chemical Co. Ltd. (Taichung, Taiwan). When present, the hybrid reactive hot melt adhesive composition includes from 0 % by weight to 3 % by weight, or even from 0.1 % by weight to 2 % by weight antioxidant.

USES

The hybrid reactive hot melt adhesive compositions of this invention can be employed to bond a wide variety of substrates including fabric, glass (e.g. ink glass, uncoated glass, coated glass), metal (e.g. aluminum, anodized

aluminum, stainless steel), polyolefins (e.g., polypropylene, polyethylene (e.g. low density polyethylene, linear low density polyethylene, high density polyethylene), polypropylene, oriented polypropylene, copolymers of polyolefins and other comonomers), surface treated (e.g. plasma treated, corona treated polyolefins, metalized polyolefins (e.g. metalized polypropylene), polyether sulfones, polycarbonate, polyamide (e.g. nylon), polyester (e.g. polybutylene terephthalate (PBT)), acrylics, acrylonitrile butadiene styrene (ABS), poly (methyl methacrylate) (PMMA), polyvinyl chloride (PVC), films of any kind, wood, engineered wood products, surface treated versions thereof and fiber reinforced (e.g. glass, natural fiber, carbon fiber) versions thereof.

The hybrid reactive hot melt adhesive compositions of this invention can be employed in all uses commonly known for hybrid reactive hot melt adhesives including adhering and/or sealing components of vehicles (e.g. automobiles, recreational vehicles, buses, trains, planes), windows, appliances, filters, electronic components, wood or plastic materials (e.g. laminated panels, edge-banding, profile wrapping), textiles, flooring.

The hybrid reactive hot melt adhesive compositions of this invention are useful for adhering and/or sealing electronic components for various applications including display bonding (e.g. phones, televisions, computers, tablets, e-readers, auto electronics), components of portable devices (e.g., smartphones, tablets, laptops, e-readers), components of wearable devices (e.g., smartwatch, earbuds, smartglass, virtual reality headset), accessory assembly (e.g., charger, finger print and touch sensor), battery assembly, and soft goods assembly (e.g. electronic cases and accessories).

The hybrid reactive hot melt adhesive composition may be applied to the substrate using any suitable coating process including, e.g., air knife, trailing blade, spraying, foaming, brushing, dipping, doctor blade, roll coating, gravure coating, offset gravure coating, rotogravure coating, linear extruder, hand gun and combinations thereof. The hybrid reactive hot melt adhesive can also be printed on in a predetermined pattern. The hybrid reactive hot melt adhesive can also be applied to a release liner where the adhesive/liner composite is adhered to a substrate.

The hybrid reactive hot melt adhesive composition can be applied at any suitable temperature including, e.g., from 80°C to 180°C, from 100°C to 180°C, from 120 °C to 170 °C, or even from 120°C to 160°C.

The surface of the substrate, on which the hybrid reactive hot melt adhesive composition is applied, optionally is treated to enhance adhesion using any suitable method for enhancing adhesion to the substrate surface including, e.g., corona treatments, chemical treatments, flame treatments, plasma treatments and combinations thereof.

## METHODS OF MAKING

Also, disclosed herein are methods of making the hybrid reactive hot melt adhesive compositions. Generally, such a method can include steps of providing a first composition that includes tackifying resin, polyester polyether copolymer and thermoplastic polymer; and combining the first composition with a polyurethane prepolymer. Methods disclosed herein can include forming a first composition and adding the prepolymer component to the first composition. The prepolymer component can be added to the first composition substantially simultaneously; alternately it can be added to the first composition in series i.e. one after another. Methods disclosed herein can also include forming a second composition that includes a prepolymer and combining the first composition and the second composition. The first composition can be added to the second composition, the second composition can be added to the first composition, or it can be a mixture thereof.

The invention will now be described by way of the following examples. All parts, ratios, percentages and amounts stated in the Examples are by weight unless otherwise specified.

## EXAMPLES

### Test Procedures

Test procedures used in the examples include the following. The procedures are conducted at room temperature (i.e., an ambient temperature of from about 20 °C to about 25 °C) unless otherwise specified.

### Viscosity Test Method

Viscosity is measured on a molten sample that is at the stated temperature using a Brookfield Thermosel Viscometer using a number 27 spindle at 20 rotations per minute.

### Viscosity Stability Test Method

After taking the Viscosity as described above, the sample was placed in the Thermosel for 24 hours. The Average % Change in Viscosity per hour is then calculated by dividing the total viscosity change by 24.

Sustainable Content

The sustainable content in % by weight is determined by multiplying the proportion of each sustainable component that is sustainable, as reported by the supplier by the amount of that component present in the hybrid reactive hot melt adhesive composition and adding the amounts together.

For example, the Sustainable Content of Example 1 is:

$$19.5\ (1) + 25\ (.656) + 10\ (.67) = 42.6\%\ \text{by weight}$$

Lap Shears

Lap shear were run according to ASTM D1002.

The substrates were plaques of clear Pelram polycarbonate (25.4 mm wide x 101.6 mm long x 4.8 mm thick). The adhesive was dispensed using a high precision adhesive dispensing robot under the following conditions: 23 gage needle (21 gage needle for Control 1), a syringe temperature of 140°C and a needle temperature of 170°C.

The adhesive was dispensed to cover a bond area of 12.7 mm x 25.4mm x 0.15mm thick - once the two substrates were pushed together. After application, the second plaque was pushed into place to cover the adhesive, forming a 12.7 mm overlap bond. A 7-kg weight was then placed on top of the bond for 1 minute, after which a 1-kg weight was placed on top of the bond for 5 minutes. All bonds were then aged at 25°C & 50% relative humidity (RH) for 1 week prior to testing. Additional aging was performed for some bonds. The following types of bonds were tested.

Room Temperature Lap Shear (RT) (no additional aging, pulled at room temperature Table One

NT (Not Tested)

| | **Control 1** | **Example 1** | **Example 2** | **Control 2** | **Example 3** |
|---|---|---|---|---|---|
| VORANOL 220-056N | 25.4 | 1.5 | 2.2 | 15 | |
| VELVETOL H2000 (100% bio-based content) | | 19.5 | 23.1 | | 15 |
| PIOTHANE 3500HD | 15.4 | | | 15 | |
| CHANDA CA-4030SX (65.6% bio-based content) | | 25 | 15.4 | | 15 |
| LUPRANATE M | 8.9 | 9.4 | 9.1 | 9 | 9 |
| KRISTALEX 3100 | 34 | 26 | | 39.85 | |
| SYLVALITE RE110L (92% bio-based) | | | 34 | | 41.85 |
| LEVAMELT 456 | 7.5 | | 7.5 | 11 | |
| PEARLBOND ECO 590 (67% bio-based) | | 10 | | | 6 |
| RITEFLEX 425 RF-NAT | 8.3 | 8.2 | 8.2 | | |
| HYTREL 3078 | | | | 10 | 9 |
| JEFFCAT DMDEE | 0.1 | 0.1 | 0.1 | 0.15 | 0.15 |
| Carbon black | 0.3 | 0.2 | 0.1 | | |
| EVERNOX 10 | 0.1 | 0.1 | 0.1 | | |
| Viscosity @ 160° C (mPa·s) | 2250 | 2310 | 6700 | 6500 | 6100 |
| Viscosity Stability (Average % Change per Hour) | NT | NT | NT | 1 | 3 |
| Reactive Content (Weight %) | 48.4 | 55.5 | 49.9 | 39 | 39 |
| Sustainable Content (Weight %) | 0 | 42.6 | 64.5 | 0 | 67.3 |
| Overlap shear strength (mPa, PC/PC) | 4.7 | 4.9 | 4.5 | 6.3 | 6.6 |

Other embodiments are within the claims.

## Claims

1. A hybrid reactive hot melt adhesive composition comprising:

    a. a polyester polyether copolymer,
    b. a thermoplastic polymer different from the polyester polyether copolymer,
    c. a tackifying agent, and
    d. a polyurethane prepolymer comprising the reaction product of a sustainable polyol and a polyfunctional isocyanate having a functionality of 2 or more,

    wherein at least one of the group consisting of the polyester polyether copolymer, the thermoplastic polymer and the tackifying agent is a sustainable component.

2. The hybrid reactive hot melt adhesive composition of claim 1, wherein the reactive portion is present at from 20% by weight to 60%.

3. The hybrid reactive hot melt adhesive composition of claim 1 being free of petrol-based polyol and petrol-based tackifying agent.

4. The hybrid reactive hot melt adhesive composition of claim 1 having a monomeric diisocyanate content of less than 0.1% by weight, as tested according to the CURRENTA HPLC-MS/MS CAM-0642303-18E - FEICA Test Method.

5. The hybrid reactive hot melt adhesive composition of claim 1 wherein

    the tackifying agent is bio-based; and/or
    the tackifying agent is present at from 32% by weight to 45% by weight; and/or
    the tackifying agent is a rosin ester.

6. The hybrid reactive hot melt adhesive composition of claim 1 having a sustainable content of from 60% by weight to 100% by weight.

7. The hybrid reactive hot melt adhesive composition of claim 1 having a Viscosity at 160°C of no greater than 10,000 mPa·s (no greater than 10,000 cP).

8. The hybrid reactive hot melt adhesive composition of claim 1 wherein the polyester polyether copolymer has a Melt Flow Rate (190°C, 2.16 kg) of from 7 to 20 grams/10 minutes.

9. The hybrid reactive hot melt adhesive composition of claim 1 wherein the thermoplastic polymer is a bio-based polyurethane.

10. The hybrid reactive hot melt adhesive composition of claim 1 comprising:

    a. from 3% by weight to 15% by weight of the polyester polyether copolymer,
    b. from 3% by weight to 15% by weight of the thermoplastic polymer,
    c. from 20% by weight to 40% by weight of the tackifying agent,

    the polyurethane prepolymer comprising the reaction product of,

    i. 20% by weight to 60% by weight of the sustainable polyol, and
    ii. 5% by weight to 15% by weight of the polyfunctional isocyanate having a functionality of 2 or more.

11. The hybrid reactive hot melt adhesive composition of claim 10 wherein the thermoplastic polymer is sustainable, and the hybrid reactive hot melt adhesive composition has a Viscosity @ 160°C of no greater than 7500 mPa·s (no greater than 7500 cP).

12. The hybrid reactive hot melt adhesive composition of claim 10 wherein the tackifying agent is rosin-based and the hybrid reactive hot melt adhesive composition has no greater than a 5% increase in Viscosity when tested according to the Viscosity Stability Test Method.

13. The hybrid reactive hot melt adhesive composition of claim 10 wherein the thermoplastic polymer and the tackifying agent are sustainable components.

14. An electronic assembly comprising the composition of claim 1.

15. A vehicle component comprising the composition of claim 1.

**Patentansprüche**

1. Eine hybride reaktive Schmelzklebstoffzusammensetzung, umfassend:

   a. ein Polyester-Polyether-Copolymer,
   b. ein thermoplastisches Polymer, das sich von dem Polyester-Polyether-Copolymer unterscheidet,
   c. ein Klebrigmacher und
   d. ein Polyurethan-Präpolymer, das das Reaktionsprodukt eines nachhaltigen Polyols und eines polyfunktionellen Isocyanats mit einer Funktionalität von 2 oder mehr umfasst,

   wobei mindestens eines aus der Gruppe bestehend aus dem Polyester-Polyether-Copolymer, dem thermoplastischen Polymer und dem Klebrigmacher eine nachhaltige Komponente ist.

2. Die hybride reaktive Schmelzklebstoffzusammensetzung nach Anspruch 1, wobei der reaktive Anteil in einer Menge von 20 Gew.-% bis 60 Gew.-% vorliegt.

3. Die hybride reaktive Schmelzklebstoffzusammensetzung nach Anspruch 1, die frei von Polyol auf Erdölbasis und Klebrigmacher auf Erdölbasis ist.

4. Die hybride reaktive Schmelzklebstoffzusammensetzung nach Anspruch 1, die einen Gehalt an monomerem Diisocyanat von weniger als 0,1 Gew.-% aufweist, gemessen gemäß der CURRENTA HPLC-MS/MS CAM-0642303-18E - FEICA-Prüfmethode.

5. Die hybride reaktive Schmelzklebstoffzusammensetzung nach Anspruch 1, wobei

   der Klebrigmacher biobasiert ist; und/oder
   der Klebrigmacher in einer Menge von 32 Gew.-% bis 45 Gew.-% vorliegt; und/oder
   der Klebrigmacher ein Kolophoniumester ist.

6. Die hybride reaktive Schmelzklebstoffzusammensetzung nach Anspruch 1 mit einem Anteil an nachhaltigen Bestandteilen von 60 Gew.-% bis 100 Gew.-%.

7. Die hybride reaktive Schmelzklebstoffzusammensetzung nach Anspruch 1, die eine Viskosität bei 160 °C von nicht mehr als 10.000 mPa·s (nicht mehr als 10.000 cP) aufweist.

8. Die hybride reaktive Schmelzklebstoffzusammensetzung nach Anspruch 1, wobei das Polyester-Polyether-Copolymer eine Schmelzflussrate (190 °C, 2,16 kg) von 7 bis 20 Gramm/10 Minuten aufweist.

9. Die hybride reaktive Schmelzklebstoffzusammensetzung nach Anspruch 1, wobei das thermoplastische Polymer ein biobasiertes Polyurethan ist.

10. Die hybride reaktive Schmelzklebstoffzusammensetzung nach Anspruch 1, umfassend:

    a. 3 bis 15 Gew.-% des Polyester-Polyether-Copolymers,
    b. 3 bis 15 Gew.-% des thermoplastischen Polymers,
    c. 20 bis 40 Gew.-% des Klebrigmachers,

    wobei das Polyurethan-Präpolymer das Reaktionsprodukt aus

    i. 20 Gew.-% bis 60 Gew.-% des nachhaltigen Polyols und

ii. 5 Gew.-% bis 15 Gew.-% des polyfunktionellen Isocyanats mit einer Funktionalität von 2 oder mehr.

**11.** Die hybride reaktive Schmelzklebstoffzusammensetzung nach Anspruch 10, wobei das thermoplastische Polymer nachhaltig ist und die hybride reaktive Schmelzklebstoffzusammensetzung eine Viskosität bei 160 °C von nicht mehr als 7500 mPa·s (nicht mehr als 7500 cP) aufweist.

**12.** Die hybride reaktive Schmelzklebstoffzusammensetzung nach Anspruch 10, wobei der Klebrigmacher auf Kolophonium basiert und die hybride reaktive Schmelzklebstoffzusammensetzung bei Prüfung gemäß der Viskositätsstabilitäts-Prüfmethode einen Anstieg der Viskosität von nicht mehr als 5 % aufweist.

**13.** Die hybride reaktive Schmelzklebstoffzusammensetzung nach Anspruch 10, wobei das thermoplastische Polymer und der Klebrigmacher nachhaltige Komponenten sind.

**14.** Eine elektronische Baugruppe, umfassend die Zusammensetzung nach Anspruch 1.

**15.** Ein Fahrzeugbauteil, umfassend die Zusammensetzung nach Anspruch 1.

## Revendications

**1.** Composition adhésive thermofusible réactive hybride comprenant :

a. un copolymère polyester-polyéther,
b. un polymère thermoplastique différent du copolymère polyester-polyéther,
c. un agent tackifiant, et
d. un prépolymère de polyuréthane comprenant le produit de réaction d'un polyol durable et d'un isocyanate polyfonctionnel ayant une fonctionnalité de 2 ou plus,

dans lequel au moins un élément du groupe constitué du copolymère polyester-polyéther, du polymère thermoplastique et de l'agent tackifiant est un composant durable.

**2.** Composition adhésive thermofusible réactive hybride selon la revendication 1, dans laquelle la partie réactive est présente à raison de 20 % en poids à 60 %.

**3.** Composition adhésive thermofusible réactive hybride selon la revendication 1, exempte de polyol à base de pétrole et d'agent tackifiant à base de pétrole.

**4.** Composition adhésive thermofusible réactive hybride selon la revendication 1, ayant une teneur en diisocyanate monomère inférieure à 0,1 % en poids, telle que testée selon la méthode d'essai CURRENTA HPLC-MS/MS CAM-0642303-18E - FEICA.

**5.** Composition adhésive thermofusible réactive hybride selon la revendication 1, dans laquelle

l'agent tackifiant est d'origine biologique ; et/ou
l'agent tackifiant est présent à raison de 32 % en poids à 45 % en poids ; et/ou
l'agent tackifiant est un ester de colophane.

**6.** Composition adhésive thermofusible réactive hybride selon la revendication 1, présentant une teneur en composants durables comprise entre 60 % en poids et 100 % en poids.

**7.** Composition adhésive thermofusible réactive hybride selon la revendication 1, présentant une viscosité à 160 °C ne dépassant pas 10 000 mPa·s (ne dépassant pas 10 000 cP).

**8.** Composition adhésive thermofusible réactive hybride selon la revendication 1, dans laquelle le copolymère polyester-polyéther présente un indice de fluidité à chaud (190 °C, 2,16 kg) compris entre 7 et 20 grammes/10 minutes.

**9.** Composition adhésive thermofusible réactive hybride selon la revendication 1, dans laquelle le polymère thermoplastique est un polyuréthane d'origine biologique.

**10.** Composition adhésive thermofusible réactive hybride selon la revendication 1, comprenant :

a. de 3 % en poids à 15 % en poids du copolymère polyester-polyéther,
b. de 3 % en poids à 15 % en poids du polymère thermoplastique,
c. de 20 % en poids à 40 % en poids d'agent tackifiant,

le prépolymère de polyuréthane comprenant le produit de réaction de,

i. 20 % en poids à 60 % en poids du polyol durable, et
ii. 5 % en poids à 15 % en poids d'isocyanate polyfonctionnel ayant une fonctionnalité de 2 ou plus.

**11.** Composition adhésive thermofusible réactive hybride selon la revendication 10, dans laquelle le polymère thermoplastique est durable, et la composition adhésive thermofusible réactive hybride présente une viscosité à 160 °C ne dépassant pas 7 500 mPa·s (ne dépassant pas 7 500 cP).

**12.** Composition adhésive thermofusible réactive hybride selon la revendication 10, dans laquelle l'agent tackifiant est à base de colophane et la composition adhésive thermofusible réactive hybride ne présente pas une augmentation de viscosité supérieure à 5 % lorsqu'elle est testée selon la méthode d'essai de stabilité de la viscosité.

**13.** Composition adhésive thermofusible réactive hybride selon la revendication 10, dans laquelle le polymère thermoplastique et l'agent tackifiant sont des composants durables.

**14.** Assemblage électronique comprenant la composition selon la revendication 1.

**15.** Composant automobile comprenant la composition selon la revendication 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2021041534 A
- WO 2012154940 A
- WO 2018165546 A
- WO 9115530 A
- WO 2017110794 A
- US 2013085239 A
- WO 2020043333 A
- WO 2011109629 A
- US 3832314 A
- US 3932326 A
- US 3959062 A, Hoh
- US 10611926 B2
- US 2020199408 A1